(19) Europäisches Patentamt / European Patent Office / Office européen des brevets

(11) **EP 4 481 539 A1**

(12) **DEMANDE DE BREVET EUROPEEN**

(43) Date de publication:
**25.12.2024 Bulletin 2024/52**

(21) Numéro de dépôt: **24180967.2**

(22) Date de dépôt: **10.06.2024**

(51) Classification Internationale des Brevets (IPC):
**G06F 1/3234** (2019.01)   **G06F 1/3246** (2018.01)
**G06F 1/3203** (2019.01)   **G06F 9/4401** (2018.01)

(52) Classification Coopérative des Brevets (CPC):
**G06F 1/3246; G06F 1/3203; G06F 1/3234;
G06F 9/4418**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH MA MD TN**

(30) Priorité: **20.06.2023 FR 2306353**

(71) Demandeur: **STMicroelectronics International
N.V.
1228 Plan-les-Ouates, Geneva (CH)**

(72) Inventeur: **LE COQ, Stephane
35235 THORIGNE FOUILLARD (FR)**

(74) Mandataire: **Cabinet Beaumont
4, Place Robert Schuman
B.P. 1529
38025 Grenoble Cedex 1 (FR)**

(54) **PROCÉDÉ DE GESTION DE MISE EN VEILLE PROLONGÉE D'UN SYSTÈME EMBARQUÉ**

(57) La présente description concerne un procédé de gestion de mise en veille prolongée d'un système embarqué (100), comprenant les étapes de :
- détermination d'une valeur de charge électrique utilisée, lors d'une mise en veille prolongée du système, pour une sauvegarde de données de contexte logiciel dans une mémoire non volatile (116) du système ;
- détermination d'une valeur d'un courant utilisé, lors d'une mise en veille prolongée du système, pour une sauvegarde dans une mémoire volatile (114) du système ;
- détermination, à partir des valeurs précédemment déterminées, d'une valeur seuil définissant une durée au-delà de laquelle une consommation électrique engendrée par la sauvegarde dans la mémoire non volatile est inférieure à celle dans la mémoire volatile ;
- sauvegarde des données de contexte logiciel dans la mémoire non volatile ou volatile selon la durée prévue de mise en veille prolongée du système.

Fig 3

Processed by Luminess, 75001 PARIS (FR)

**Description**

Domaine technique

La présente description concerne de façon générale la mise en veille prolongée d'un système embarqué.

Technique antérieure

Un système embarqué est un système informatique et électronique autonome destiné à exécuter une ou plusieurs tâches précises au sein d'un appareil, comme par exemple un véhicule, un objet connecté, auquel il est intégré.

Pour de nombreux systèmes embarqués, la minimisation de sa consommation électrique est un point important à gérer.

Lorsque le système embarqué est actif, toutes les mémoires du système sont disponibles, alimentées électriquement et synchronisées par des signaux d'horloge. Le logiciel du système s'exécute normalement et son contexte d'exécution, c'est-à-dire l'ensemble des données utilisées par les tâches exécutées par le logiciel (comme par exemple les données présentes dans les piles (« stack » en anglais), dans les registres ou bien les données de temporisation (« timer » en anglais)), sont mises à jour en continu.

Afin de réduire la consommation électrique du système, ce dernier peut être mis en veille prolongée (« deep sleep mode » en anglais). Dans ce mode, la plupart des composants du système ne sont plus alimentés électriquement, notamment le ou les coeurs du système. Seuls quelques éléments restent alimentés, comme par exemple l'horloge temps réel (« real-time clock » en anglais) et le bloc de réveil (« wake-up block » en anglais). La durée de cette mise en veille prolongée est variable, par exemple comprise entre 10 secondes et 213 jours avec de multiples valeurs possibles comme 1 heure, 2 heures, 1 jour, etc., dans le cas d'un système embarqué communiquant selon un protocole de type NB-IoT (« Narrowband Internet of Things » en anglais).

Préalablement à la coupure d'alimentation électrique qu'implique la mise en veille prolongée, certaines données stockées dans le système, appelées « contexte logiciel » ou « software context » en anglais, comme par exemple les données présentes dans les piles (« stack » en anglais), dans les registres ou bien les données de temporisation (« timer » en anglais), doivent être sauvegardées pour pouvoir être restaurées lors de la sortie de cette mise en veille prolongée du système et permettre une reprise de l'exécution des tâches du système au point où elles ont été interrompues lors de la mise en veille prolongée.

Une première possibilité est de sauvegarder ces données de contexte logiciel dans la mémoire vive, ou RAM (« Random Access Memory » en anglais), du système. Lors de la veille prolongée, du fait que la mémoire vive du système est volatile, elle reste faiblement alimentée par un régulateur dédié afin que les données restent stockées de manière statique dans la mémoire vive. Ce courant nécessaire au maintien des données est sensible à la température à laquelle se trouve la mémoire vive.

Une deuxième possibilité est de sauvegarder ces données de contexte logiciel dans la mémoire Flash du système. Pour réaliser cette sauvegarde, la mémoire Flash doit au préalable subir une étape d'effacement des données stockées dans celle-ci. L'effacement des données stockées dans la mémoire Flash et l'écriture des données de contexte logiciel dans celle-ci implique une consommation de courant importante et demande un certain temps pour être réalisées. En outre, une mémoire Flash possède un nombre de cycles d'écriture / effacement limité avant que sa fiabilité ne soit altérée. Enfin, la gestion des emplacements des données au sein de la mémoire Flash fait appel à un système de fichiers (« File system » en anglais) dont la gestion peut être complexe.

Résumé de l'invention

Il existe un besoin de proposer une solution permettant de répondre aux problèmes rencontrés avec les solutions existantes.

Un mode de réalisation particulier répond à au moins une partie de ces problèmes et propose un procédé de gestion de mise en veille prolongée d'un système embarqué, comprenant au moins les étapes de :

- détermination d'une valeur de charge électrique $Conso_{Non\_Vola}$ destinée à être utilisée, lors d'une mise en veille prolongée du système embarqué, pour une potentielle sauvegarde de données de contexte logiciel dans une mémoire non volatile du système embarqué ;

- détermination d'une valeur d'un courant $Courant_{Sauv\_Vola}$ destiné à être utilisé, lors d'une mise en veille prolongée du système embarqué, pour une potentielle sauvegarde de données de contexte logiciel dans une mémoire volatile du système embarqué, à une première température ;

- détermination, à partir des valeurs de charge électrique $Conso_{Non\_Vola}$ et de courant $Courant_{Sauv\_Vola}$ précédemment déterminées, d'une valeur seuil $Seuil_{Conso}$ définissant une durée au-delà de laquelle une consommation électrique destinée à être engendrée par la potentielle sauvegarde de données de contexte logiciel dans la mémoire non volatile est inférieure à celle destinée à être engendrée par la potentielle sauvegarde de données de contexte logiciel dans la mémoire volatile ;

- sauvegarde des données de contexte logiciel dans la mémoire non volatile lorsqu'une durée prévue de mise en veille prolongée du système embarqué est supérieure à la valeur seuil $Seuil_{Conso}$ précédemment déterminée, ou dans la mémoire volatile lorsque la durée prévue de mise en veille prolongée est inférieure ou égale à la valeur seuil $Seuil_{Conso}$ précédemment déterminée.

Selon un mode de réalisation particulier, la valeur de charge électrique $Conso_{Non\_Vola}$ destinée à être utilisée pour la potentielle sauvegarde de données de contexte logiciel dans la mémoire non volatile est exprimée en Coulomb et déterminée par l'équation :

$$Conso_{Non\_vola} = (Courant_{Prog\_Non\_Vola} \times d_{Prog\_Non\_Vola}) + (Courant_{Eff\_Vola} \times d_{Eff\_Non\_vola}) + (Courant_{Copie\_Non\_Vola} \times d_{Copie\_Non\_Vola})$$

avec $Courant_{Prog\_Non\_Vola}$ : valeur du courant utilisé pour la programmation de la mémoire non volatile, en ampère ;

$d_{Prog\_Non\_Vola}$ : durée de la programmation de la mémoire non volatile, en seconde ;

$Courant_{Eff\_Non\_Vola}$ : valeur du courant utilisé pour l'effacement d'une partie de la mémoire non volatile, en ampère ;

$d_{Eff\_Non\_Vola}$ : durée de l'effacement d'une partie de la mémoire non volatile, en seconde ;

$Courant_{Copie\_Non\_Vola}$ : valeur du courant utilisé pour la copie des données de contexte logiciel dans la mémoire non volatile, en ampère ;

$d_{Copie\_Non\_Vola}$ : durée de la copie des données de contexte logiciel dans la mémoire non volatile, en seconde.

Selon un mode de réalisation particulier, la valeur seuil $Seuil_{Conso}$ est déterminée par l'équation :

$$Seuil_{Conso} = \frac{Conso_{Non\_Vola}}{Courant_{Sauv\_Vola}}$$

Selon un mode de réalisation particulier, la sauvegarde des données de contexte logiciel dans la mémoire non volatile est conditionnée en outre au fait que la durée prévue de mise en veille prolongée soit inférieure ou égale à une durée minimale de mise en veille prolongée $d_{Min}$ garantissant une durée de vie souhaitée de la mémoire non volatile et exprimée par l'équation :

$$d_{Min} = \frac{d_{Vie} \times 365 \times 24 \times 3600 \times Taille_{Contexte}}{N_{Max\_Cycles} \times Taille_{Mémoire\_Libre}}$$

avec $d_{Vie}$ : durée de vie souhaitée de la mémoire non volatile, en années ;

$Taille_{Contexte}$ : taille des données de contexte logiciel ;

$N_{Max\_Cycles}$ : nombre maximal théorique de cycles d'écriture / effacement de la mémoire non volatile avant sa dégradation ;

$Taille_{Mémoire\_Libre}$ : taille de mémoire libre dans la mémoire non volatile.

Dans un mode de réalisation particulier, la sauvegarde des données de contexte logiciel dans la mémoire non volatile est conditionnée en outre au fait que la valeur d'un paramètre $N_{Cycle\_Vie}$ défini par l'équation :

$$N_{Cycles\_Vie} = N_{Cycles\_Compteur} \times \frac{Taille_{Contexte}}{Taille_{Mémoire\_Libre}}$$

soit inférieure au nombre maximal théorique de cycles d'écriture / effacement de la mémoire non volatile avant sa dégradation,

avec $N_{Cycles\_Compteur}$ : nombre de cycles d' écriture / effacement déjà réalisés par la mémoire non volatile ;

$Taille_{Contexte}$ : taille des données de contexte logiciel ;

$Taille_{Mémoire\_Libre}$ : taille de mémoire libre dans la mémoire non volatile.

Selon un mode de réalisation particulier, la sauvegarde des données de contexte logiciel dans la mémoire non volatile comporte la mise en oeuvre des étapes suivantes :

- programmation d'un drapeau $D_{Non\_Vola}$ indiquant que la sauvegarde des données de contexte logiciel est réalisée dans la mémoire non volatile ;

- détermination d'une adresse de début d'écriture dans la mémoire non volatile ;

- écriture des données de contexte logiciel dans la mémoire non volatile, à partir de l'adresse de début d'écriture précédemment déterminée ;

- soustraction, de la durée prévue de mise en veille prolongée du système embarqué, d'une durée de mise en oeuvre de la précédente étape d'écriture des données de contexte logiciel dans la mémoire non volatile ;

- arrêt de l'alimentation électrique de la mémoire volatile.

Selon un mode de réalisation particulier, le procédé comporte en outre une sortie de mise en veille prolongée du système embarqué incluant au moins la mise en oeuvre des étapes suivantes :

- lecture de la valeur du drapeau $D_{Non\_Vola}$ ;

- si la valeur du drapeau $D_{Non\_Vola}$ indique que la sauvegarde des données de contexte logiciel a été réalisée dans la mémoire volatile, le système embarqué est mis directement à l'état actif, ou

- si la valeur du drapeau $D_{Non\_Vola}$ indique que la sauvegarde des données de contexte logiciel a été réalisée dans la mémoire non volatile, les données de contexte logiciel sont lues dans la mémoire non volatile à partir de l'adresse de début d'écriture et écrites dans la mémoire volatile, puis des blocs de la mémoire non volatile dans lesquels les données de contexte logiciel ont été sauvegardées sont effacés.

Selon un mode de réalisation particulier, la sortie de mise en veille prolongée du système embarqué comporte en outre, avant ou après l'étape de lecture de la valeur du drapeau, une étape de de reprise de l'alimentation électrique de la mémoire volatile.

Selon un mode de réalisation particulier, la sortie de mise en veille prolongée du système embarqué comporte en outre, avant l'étape de lecture de la valeur du drapeau $D_{Non\_Vola}$, une étape de détermination d'une cause de la sortie de mise en veille prolongée du système embarqué, puis :

- si la sortie de mise en veille est due à une réinitialisation du système embarqué, un démarrage initial du système embarqué, une mise à jour logiciel via FOTA, ou un événement de surveillance, le système embarqué est mis directement à l'état actif sans lecture de la valeur du drapeau, ou

- si la sortie de mise en veille n'est pas due à une réinitialisation du système embarqué, un démarrage initial du système embarqué, une mise à jour logiciel via FOTA, ou un événement de surveillance, la lecture de la valeur du drapeau est mise en oeuvre.

Selon un mode de réalisation particulier, il est proposé un système embarqué comprenant des moyens de mise en oeuvre du procédé ci-dessus.

Selon un mode de réalisation particulier, la mémoire non volatile est une mémoire Flash, et la mémoire volatile est une mémoire vive.

Selon un mode de réalisation particulier, il est proposé un produit programme informatique comprenant des instructions qui, lorsque le programme est exécuté par un système embarqué, conduisent celui-ci à mettre en oeuvre le procédé ci-dessus.

Selon un mode de réalisation particulier, il est proposé un support lisible par ordinateur comprenant des instructions qui, lorsqu'elles sont exécutées par un système embarqué, conduisent celui-ci à mettre en oeuvre le procédé ci-dessus.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

- la figure 1 représente schématiquement un exemple de réalisation d'un système embarqué dans lequel un procédé de gestion de mise en veille prolongé du système est mis en oeuvre ;

- la figure 2 représente schématiquement des exemples de consommations de courant d'une mémoire volatile et d'une mémoire non volatile lors d'une bascule entre un mode actif et un mode de veille prolongée dans lequel l'une de ces mémoires est utilisée pour la sauvegarde des données de contexte logiciel ;

- la figure 3 représente schématiquement les étapes d'un exemple de procédé de gestion de mise en veille prolongée d'un système embarqué ;

- la figure 4 représente, pour différentes températures, la valeur d'un courant destiné à être utilisé, lors d'une mise en veille prolongée d'un système embarqué, pour une potentielle sauvegarde de données de contexte logiciel dans une mémoire volatile du système embarqué ;

- la figure 5 représente, pour différentes températures, des valeurs seuils définissant une durée au-delà de laquelle une consommation électrique destinée à être engendrée par une potentielle sauvegarde de données de contexte logiciel dans la mémoire non volatile du système est inférieure à celle destinée à être engendrée par la potentielle sauvegarde de données de contexte logiciel dans la mémoire volatile du système embarqué.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, le codage nécessaire à la mise en oeuvre des différentes étapes du procédé de gestion de mise en veille prolongée du système embarqué n'est pas détaillé. L'homme du métier sera à même de réaliser de manière détaillée les différentes fonctions du procédé à partir de la description fonctionnelle donnée ici.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Sauf précision contraire, les expressions "environ", "approximativement", "sensiblement", et "de l'ordre de" signifient à 10 % près, de préférence à 5 % près.

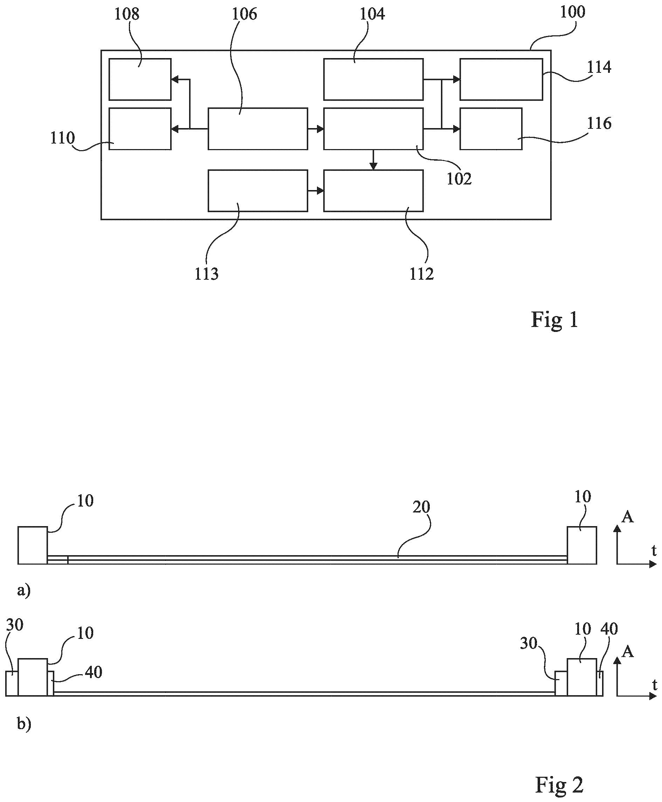

Un exemple de réalisation d'un système embarqué 100 mettant en oeuvre un procédé de gestion de mise en veille prolongée décrit plus loin est représenté sur la figure 1. Sur la figure 1, seuls certains des éléments du système 100 sont représentés et décrits ci-dessous.

Dans l'exemple de réalisation décrit ici, le système embarqué 100 communique selon un protocole de type NB-IoT et est par exemple destiné à être intégré dans des dispositifs de type IoT pour lesquels la gestion de la consommation électrique est importante.

Le système 100 selon cet exemple de réalisation comporte un premier coeur 102, ou circuit central, gérant notamment les fonctions de sécurité et pilotant les autres éléments du système 100.

Le système 100 selon cet exemple de réalisation comporte également un deuxième coeur 104, ou circuit central, réalisant les différentes fonctions, ou applications ou tâches, remplies par le système 100. Le deuxième coeur 104 gère par exemple les protocoles IP, MQTT, TLS, etc. Le deuxième coeur 104 peut également gérer des fonctions simples telles que des mesures.

Le système 100 selon cet exemple de réalisation comporte également un troisième coeur 106, ou circuit central, gérant et réalisant les communications du système 100 avec l'environnement extérieur. Le troisième coeur 106 est couplé à une ou plusieurs mémoires qui, dans cet exemple, correspondent à une première mémoire volatile 108 (par exemple une mémoire vive) et une première mémoire non volatile 110 (par exemple une mémoire Flash), et également au premier coeur 102.

Le système 100 selon cet exemple de réalisation comporte également une unité de gestion de l'alimentation électrique 112 pilotée par le premier coeur 102 et couplée également à un bloc RTC (« Real-Time Clock » en anglais, ou horloge temps réel) 113.

Le système 100 selon cet exemple de réalisation comporte également une deuxième mémoire volatile 114, par exemple une mémoire vive dite de rétention (également appelée RETRAM), et une deuxième mémoire non volatile 116 (par exemple une mémoire Flash) couplées aux premier et deuxième coeurs 102, 104.

En variante, l'architecture du système 100 peut être différente de celle décrite ci-dessus et représentée sur la figure 1, et peut comporter des circuits ou éléments additionnels ou bien ne pas comporter certains des éléments ou circuits précédemment décrits.

En outre, les éléments du système 100 peuvent être différents de ceux décrits ci-dessus. Par exemple, la première mémoire vive 108 et/ou la deuxième mémoire vive 114 peuvent correspondre à un autre type de mémoires volatiles. Selon un autre exemple, la première mémoire Flash 110 et/ou la deuxième mémoire Flash 116 peuvent correspondre à un autre type de mémoires non volatiles, par exemple de type EEPROM (« Electrically-Erasable Programmable Read-Only Memory » en anglais).

La figure 2 représente schématiquement la consommation électrique d'une mémoire volatile et d'une mémoire non volatile d'un système embarqué lors de différentes phases (mode actif et mode de veille prolongée) successives. Sur cette figure schématique, les durées des différentes phases et les amplitudes des courants utilisés au cours de ces différentes phases ne sont pas représentées à l'échelle les unes par rapport aux autres.

Le schéma a) de la figure 2 représente l'évolution dans le temps de l'intensité d'un courant électrique utilisé par la deuxième mémoire volatile 114 du système 100 au cours de différentes phases d'utilisation du système 100. Les références 10 désignent le courant utilisé par la deuxième mémoire volatile 114 lorsque le système 100 est en mode actif (deux phases en mode actif distinctes sont représentées sur la figure 2), et la référence 20 désigne le courant utilisé lorsque le système 100 est en veille prolongée (entre les deux phases en mode actif) avec une sauvegarde des données de contexte logiciel dans la deuxième mémoire volatile 114.

Le schéma b) de la figure 2 représente l'évolution dans le temps de l'intensité d'un courant électrique utilisé par la deuxième mémoire non volatile 116 du système 100 au cours de différentes phases d'utilisation du système 100. Comme sur le schéma a), les références 10 désignent le courant utilisé par la deuxième mémoire non volatile 116 lorsque le système 100 est en mode actif. Les références 30 désignent le courant utilisé par la deuxième mémoire non volatile 116 lors d'un effacement d'une partie de ses blocs, un tel effacement étant mis en oeuvre lors d'un passage d'une veille prolongée à un mode actif du système 100. Les références 40 désignent le courant utilisé par la deuxième mémoire non volatile 116 lors de l'écriture des données de contexte logiciel dans celle-ci avant l'entrée définitive du système 100 en veille prolongée.

Ainsi, les schémas a) et b) de la figure 2 illustrent le fait que lorsque les données de contexte logiciel sont sauvegardées dans la deuxième mémoire volatile 114, la consommation énergétique liée à cette sauvegarde correspond au courant consommé par la mémoire lors de la veille prolongée (désigné par la référence 20 sur le schéma a) de la figure 2), tandis que lorsque les données de contexte logiciel sont sauvegardées dans la deuxième mémoire non volatile 116, la consommation énergétique liée à cette sauvegarde correspond au courant consommé par la mémoire lors des opérations d'effacement et d'écriture mises en oeuvre dans celle-ci juste avant la veille prolongée et à la fin de celle-ci (correspondant aux consommations désignées par les références 30 et 40 sur le schéma b) de la figure 2).

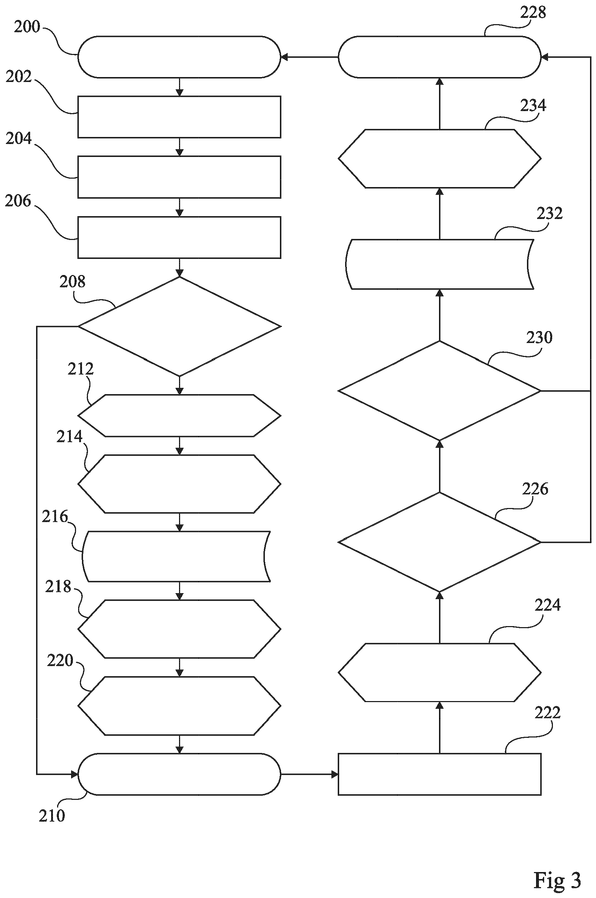

La figure 3 représente les étapes d'un exemple de procédé de gestion de mise en veille prolongée du système 100, réalisant la sauvegarde des données de contexte logiciel du système 100 dans la deuxième mémoire volatile 114 ou dans la deuxième mémoire non volatile 116 suivant la consommation électrique impliquée par la sauvegarde des données dans chacune d'elles.

Dans cet exemple, le procédé débute alors que le système 100 est en mode actif et qu'une sortie de ce mode actif est initiée (étape 200).

Lors d'une étape suivante 202, une valeur de charge électrique $Conso_{Non\_Vola}$ destinée à être utilisée, lors d'une mise en veille prolongée du système 100, pour une potentielle sauvegarde des données de contexte logiciel dans une mémoire non volatile du système 100 qui correspond, en considérant l'exemple du système 100 précédemment décrit en lien avec la figure 1, à la deuxième mémoire non volatile 116 du système 100, est déterminée. Dans un exemple de réalisation particulier, cette valeur de charge électrique $Conso_{Non\_Vola}$, exprimée en Coulomb, est déterminée par l'équation :

$$Conso_{Non\_vola} = (Courant_{Prog\_Non\_Vola} \times d_{Prog\_Non\_Vola}) + (Courant_{Eff\_Vola} \times d_{Eff\_Non\_vola}) + (Courant_{Copie\_Non\_Vola} \times d_{Copie\_Non\_Vola}).$$

Le paramètre $Courant_{Prog\_Non\_Vola}$ correspond à la valeur du courant utilisé pour la programmation de la mémoire non volatile 116, en ampère.

Le paramètre $d_{Prog\_Non\_Vola}$ correspond à la durée de la programmation de la mémoire non volatile 116, en seconde.

Le paramètre $Courant_{Eff\_Non\_Vola}$ correspond à la valeur du courant utilisé pour l'effacement d'une partie de la mémoire non volatile 116, en ampère.

Le paramètre $d_{Eff\_Non\_Vola}$ correspond à la durée de l'effacement d'une partie de la mémoire non volatile 116, en seconde.

Le paramètre $Courant_{Copie\_Non\_Vola}$ correspond à la valeur du courant utilisé pour la copie des données de contexte logiciel dans la mémoire non volatile 116, en ampère.

Le paramètre $d_{Copie\_Non\_Vola}$ correspond à la durée de la copie des données de contexte logiciel dans la mémoire non volatile 116, en seconde.

Ainsi, la valeur de charge électrique $Conso_{Non\_Vola}$ correspond à la somme des charges électriques destinées à être utilisées par la mémoire non volatile 116 lors d'opérations de programmation, d'effacement et d'écriture. A titre d'exemple, cette valeur de la charge électrique $Conso_{Non\_Vola}$ peut être comprise entre 630, 8 $\mu$C (valeur minimale obtenue en considérant les durées minimales de programmation, d'effacement et de copie des données dans la mémoire non volatile 116) et 1261,6 $\mu$C (valeur maximale obtenue en considérant les durées maximales de programmation, d'effacement et de copie des données dans la mémoire non volatile 116), et il est possible de choisir, pour la valeur de la charge électrique $Conso_{Non\_Vola}$, une valeur moyenne comprise entre ces valeurs minimale et maximale. Cette valeur de charge électrique $Conso_{Non\_Vola}$ peut être déterminée sur la base de mesures qui ne sont pas répétées à chaque sortie du mode actif du système embarqué 100.

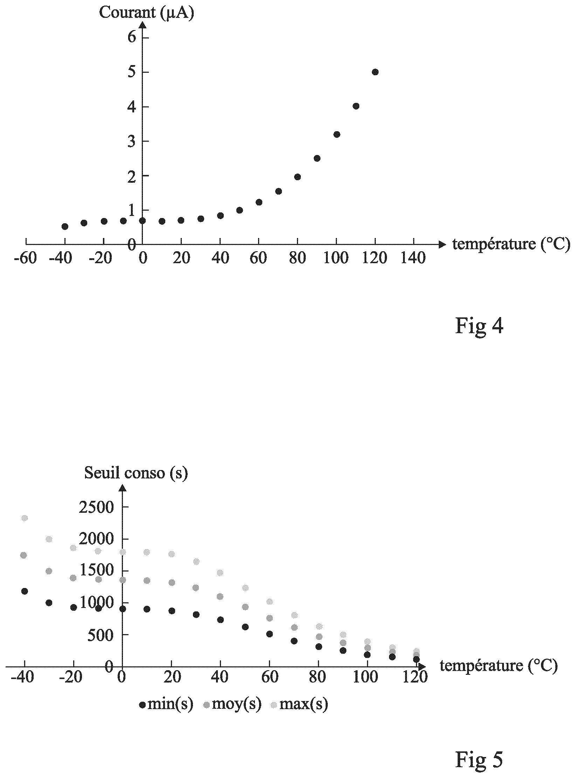

Après l'étape 202 décrite ci-dessus, une valeur d'un courant appelé $Courant_{Sauv\_Vola}$ et destiné à être utilisé, lors d'une mise en veille prolongée du système 100, pour une potentielle sauvegarde de données de contexte logiciel dans une mémoire volatile du système 100, est déterminée, pour une première température (étape 204). Cette mémoire volatile du système 100 correspond, en considérant l'exemple du système 100 précédemment décrit en lien avec la figure 1, à la deuxième mémoire volatile 114 du système 100. Cette valeur de courant $Courant_{Sauv\_Vola}$ peut être déterminée en utilisant une courbe ou des points de mesure préétablis de ce courant pour différentes valeurs de température, comme représenté sur la figure 4. A titre d'exemple, pour une première température égale à 25°C, la valeur du courant $Courant_{Sauv\_Vola}$ peut être égale à 0,7 $\mu$A (cette valeur incluant, dans cet exemple, le courant consommé par le régulateur de tension permettant d'assurer l'alimentation électrique de la mémoire volatile lors de la mise en veille prolongée du système embarqué ainsi que les fuites de courant observées lors de cette mise en veille prolongée).

Lors d'une étape suivante 206, à partir des valeurs de charge électrique $Conso_{Non\_Vola}$ et de courant $Courant_{Sauv\_Vola}$ précédemment déterminées, une valeur seuil $Seuil_{Conso}$ définissant une durée au-delà de laquelle une consommation électrique destinée à être engendrée par la potentielle sauvegarde de données de contexte logiciel dans la mémoire non volatile 116 du système 100 est inférieure à celle destinée à être engendrée par la potentielle sauvegarde de données de contexte logiciel dans la mémoire volatile 114 du système embarqué 100 est déterminée. Selon un exemple de réalisation particulier, la valeur seuil $Seuil_{Conso}$, exprimée en secondes, est déterminée par l'équation :

$$Seuil_{Conso} = \frac{Conso_{Non\_Vola}}{Courant_{Sauv\_Vola}}$$

Etant donné que la valeur du courant $Courant_{Sauv\_Vola}$ est dépendante de la température, la valeur seuil $Seuil_{Conso}$ est également dépendante de la température. La figure 5 représente des exemples de valeurs seuil $Seuil_{Conso}$ obtenues en considérant les valeurs minimales de la charge électrique $Conso_{Non\_Vola}$ (correspondant aux points ayant, pour une température donnée, les valeurs les plus basses), les valeurs maximales de la charge électrique $Conso_{Non\_Vola}$ (correspondant aux points ayant, pour une température donnée, les valeurs les plus hautes), et les valeurs moyennes de la charge électrique $Conso_{Non\_Vola}$ (correspondant aux points ayant, pour une température donnée, les valeurs situées entre les valeurs basses et hautes)

Lors d'une étape suivante 208, il est déterminé si une sauvegarde des données de contexte logiciel est réalisée dans la mémoire non volatile 116 lorsqu'une durée prévue de mise en veille prolongée du système embarqué est supérieure à la valeur seuil *Seuil*$_{Conso}$, ou dans la mémoire volatile 114 lorsque la durée prévue de mise en veille prolongée est inférieure ou égale à la valeur seuil *Seuil*$_{Conso}$.

Lorsqu'il est déterminé que la sauvegarde des données de contexte logiciel est réalisée dans la mémoire volatile 114, le système 100 peut passer directement en veille prolongée (étape 210). Dans ce cas, la sauvegarde des données de contexte logiciel dans la mémoire volatile 114 consiste à maintenir cette mémoire faiblement alimentée étant donné que les données de contexte logiciel se trouvent déjà dans la mémoire volatile 114.

Lorsqu'il est déterminé que la sauvegarde des données de contexte logiciel est réalisée dans la mémoire non volatile 116, les étapes suivantes peuvent être mises en oeuvre :

- programmation d'un drapeau (ou « Flag » en anglais) $D_{Non\_Vola}$ indiquant que la sauvegarde des données de contexte logiciel est réalisée dans la mémoire non volatile (étape 212) ;

- détermination, ou calcul, d'une adresse de début d'écriture dans la mémoire non volatile 116 (étape 214) ;

- écriture des données de contexte logiciel dans la mémoire non volatile 116, à partir de l'adresse de début d'écriture précédemment déterminée (étape 216) ;

- soustraction, de la durée prévue de mise en veille prolongée du système 100, d'une durée de mise en oeuvre de la précédente étape d'écriture des données de contexte logiciel dans la mémoire non volatile 116 (étape 218) ;

- arrêt de l'alimentation électrique de la mémoire volatile 114 (étape 220).

Après ces étapes, le système 100 peut passer en veille prolongée (étape 210).

A la sortie de cette veille prolongée du système 100 (étape 222), les étapes suivantes peuvent être mises en oeuvre :

- reprise de l'alimentation électrique de la mémoire volatile 114 (étape 224) ;

- détermination d'une cause de la sortie de mise en veille prolongée du système 100 (étape 226), puis :

  - si la sortie de mise en veille est due à une réinitialisation du système 100, un démarrage initial du système 100, une mise à jour logiciel via FOTA (« Firmware Over-The-Air » en anglais), ou un événement de surveillance (« watchdog » en anglais), le système 100 est mis directement à l'état actif (étape 228) sans lecture de la valeur du drapeau $D_{Non\_Vola}$, ou

  - si la sortie de mise en veille n'est pas due à une réinitialisation du système 100, un démarrage initial du système 100, une mise à jour logiciel via FOTA, ou un événement de surveillance, une lecture de la valeur du drapeau $D_{Non\_Vola}$ est mise en oeuvre (étape 230) .

- si la valeur du drapeau $D_{Non\_Vola}$ indique que la sauvegarde des données de contexte logiciel a été réalisée dans la mémoire volatile 114, le système 100 est mis directement à l'état actif (étape 228), ou

- si la valeur du drapeau $D_{Non\_Vola}$ indique que la sauvegarde des données de contexte logiciel a été réalisée dans la mémoire non volatile 116, les données de contexte logiciel sont lues dans la mémoire non volatile 116 à partir de l'adresse de début d'écriture et écrites dans la mémoire volatile 114 (étape 232), puis des blocs de la mémoire non volatile 116 dans lesquels les données de contexte logiciel ont été sauvegardées sont effacés (étape 234).

En variante, il est possible que l'étape 224 de reprise de l'alimentation électrique de la mémoire volatile 114 soit mise en oeuvre après la lecture de la valeur du drapeau $D_{Non\_Vola}$, cette reprise de l'alimentation électrique de la mémoire volatile 114 intervenant lorsque la sauvegarde des données de contexte logiciel a été réalisée dans la mémoire non volatile 116 et préalablement à l'écriture des données dans la mémoire volatile 114.

Dans l'exemple ci-dessus, la mise à jour du système embarqué 100 peut être réalisée à distance par technologie FOTA. La partie de la mémoire 116 réservée pour ces mises à jour peut être utilisée pour la sauvegarde des données de contexte logiciel.

Dans le procédé décrit ci-dessus, le choix de la mémoire dans laquelle la sauvegarde des données de contexte logiciel est réalisée est déterminé en comparant une durée prévue de mise en veille prolongée du système 100 avec une valeur seuil définissant une durée au-delà de laquelle une consommation électrique destinée à être engendrée par la potentielle sauvegarde de données de contexte logiciel dans la mémoire non volatile 116 du système 100 est inférieure à celle destinée à être engendrée par la potentielle sauvegarde de données de contexte logiciel dans la mémoire volatile 114 du système 100.

Selon une première variante du procédé décrit ci-dessus, il est possible que la sauvegarde des données de contexte logiciel dans la mémoire non volatile soit conditionnée, en plus du critère de la valeur seuil $Seuil_{Conso}$ précédemment exposé, au fait que la durée prévue de mise en veille prolongée soit inférieure ou égale à une durée minimale de mise en veille prolongée $d_{Min}$ garantissant une durée de vie souhaitée de la mémoire non volatile 116. Cette une durée minimale $d_{Min}$ peut s'exprimer par l'équation :

$$d_{Min} = \frac{d_{Vie} \times 365 \times 24 \times 3600 \times Taille_{Contexte}}{N_{\text{Max\_Cycles}} \times Taille_{Mémoire\_Libre}}$$

avec $d_{Vie}$ : durée de vie souhaitée de la mémoire non volatile 116, en années ;

$Taille_{Contexte}$ : taille des données de contexte logiciel ;

$N_{Max\_Cycles}$ : nombre maximal théorique de cycles d'écriture / effacement de la mémoire non volatile 116 avant sa dégradation ;

$Taille_{Mémoire\_Libre}$ : taille de mémoire libre dans la mémoire non volatile 116.

A titre d'exemple, la valeur du paramètre $N_{Max\_Cycles}$ est par exemple comprise entre 10000 et 100000.

Selon une deuxième variante, la sauvegarde des données de contexte logiciel dans la mémoire non volatile 116 peut être conditionnée au fait que la valeur d'un paramètre $N_{Cycles\_Vie}$ défini par l'équation :

$$N_{Cycles_{Vie}} = N_{Cycles_{Compteur}} \times \frac{Taille_{Contexte}}{Taille_{Mémoire_{Libre}}}$$

soit inférieur au nombre maximal théorique de cycles d'écriture / effacement de la mémoire non volatile 116 avant sa dégradation,

avec $N_{Cycles\_Compteur}$ : nombre de cycles d'écriture / effacement déjà réalisés par la mémoire non volatile 116 ;

$Taille_{Contexte}$ : taille des données de contexte logiciel ;

$Taille_{Mémoire\_Libre}$ : taille de mémoire libre dans la mémoire non volatile 116.

Les première et deuxième variantes décrites ci-dessus peuvent être combinées, la sauvegarde des données de contexte logiciel dans la mémoire non volatile 116 étant dans ce cas conditionnée à la satisfaction des trois critères exposés ci-dessus.

La mémoire non volatile 116 peut correspondre à une mémoire Flash interne au système 100, ou peut correspondre à une mémoire Flash externe au système 100 et couplée à celui-ci .

Dans tous les exemples précédemment décrits, une sauvegarde des données de contexte logiciel dans la mémoire non volatile 116 peut être réalisée en utilisant un système de fichiers (« File System » en anglais) de la mémoire non volatile 116, ou en utilisant un registre de taille adaptée à la taille des données de contexte logiciel présent dans le bloc RTC 113 pour le stockage de la valeur du drapeau $D_{Non\_Vola}$ ainsi que pour le stockage l'adresse de début d'écriture des données de contexte logiciel dans la mémoire non volatile 116.

La mise en oeuvre de ce procédé permet de réduire, par rapport aux solutions existantes, la consommation de courant lorsque le système le mettant en oeuvre est mis en veille prolongée.

Le procédé décrit ci-dessus peut avantageusement être mis en oeuvre au sein d'un système embarqué par exemple de type système sur puce, ou SoC (« System on a Chip » en anglais), comprenant une mémoire volatile telle qu'une mémoire vive et une mémoire non volatile telle qu'une mémoire Flash. Selon un exemple particulier, le procédé peut être mis en oeuvre dans un système embarqué communiquant selon un protocole de type NB-IoT tel que le protocole LTE Cat NB1.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

**Revendications**

1. Procédé de gestion de mise en veille prolongée d'un système embarqué (100), comprenant au moins les étapes de :

   - détermination (202) d'une valeur de charge électrique $Conso_{Non\_Vola}$ destinée à être utilisée, lors d'une mise en veille prolongée du système embarqué (100), pour une potentielle sauvegarde de données de contexte logiciel dans une mémoire non volatile (116) du système embarqué (100) ;
   - détermination (204) d'une valeur d'un courant $Courant_{Sauv\_Vola}$ destiné à être utilisé, lors d'une mise en veille prolongée du système embarqué (100), pour une potentielle sauvegarde de données de contexte logiciel dans une mémoire volatile (114) du système embarqué (100), à une première température ;
   - détermination (206), à partir des valeurs de charge électrique $Conso_{Non\_Vola}$ et de courant $Courant_{Sauv\_Vola}$ précédemment déterminées, d'une valeur seuil $Seuil_{Conso}$ définissant une durée au-delà de laquelle une consommation électrique destinée à être engendrée par la potentielle sauvegarde de données de contexte logiciel dans la mémoire non volatile (116) est inférieure à celle destinée à être engendrée par la potentielle sauvegarde de données de contexte logiciel dans la mémoire volatile (114) ;
   - sauvegarde des données de contexte logiciel dans la mémoire non volatile (116) lorsqu'une durée prévue de mise en veille prolongée du système embarqué (100) est supérieure à la valeur seuil $Seuil_{Conso}$ précédemment déterminée, ou dans la mémoire volatile (114) lorsque la durée prévue de mise en veille prolongée est inférieure ou égale à la valeur seuil $Seuil_{Conso}$ précédemment déterminée.

2. Procédé selon la revendication 1, dans lequel la valeur de charge électrique $Conso_{Non\_Vola}$ destinée à être utilisée pour la potentielle sauvegarde de données de contexte logiciel dans la mémoire non volatile (116) est exprimée en Coulomb et déterminée par l'équation :

$$Conso_{Non\_vola} = \left(Courant_{Prog\_Non\_Vola} \times d_{Prog\_Non\_Vola}\right)$$
$$+ \left(Courant_{Eff\_Non\_Vola} \times d_{Eff\_Non\_Vola}\right)$$
$$+ \left(Courant_{Copie\_Non\_Vola} \times d_{Copie\_Non\_Vola}\right)$$

   avec $Courant_{Prog\_Non\_Vola}$ : valeur du courant utilisé pour la programmation de la mémoire non volatile (116), en ampère ;
   $d_{Prog\_Non\_Vola}$ : durée de la programmation de la mémoire non volatile (116), en seconde ;
   $Courant_{Eff\_Non\_Vola}$ : valeur du courant utilisé pour l'effacement d'une partie de la mémoire non volatile (116), en ampère ;
   $d_{EffNon\_Vola}$ : durée de l'effacement d'une partie de la mémoire non volatile (116), en seconde ;
   $Courant_{Copie\_Non\_Vola}$ : valeur du courant utilisé pour la copie des données de contexte logiciel dans la mémoire non volatile (116), en ampère ;
   $d_{Copie\_Non\_Vola}$ : durée de la copie des données de contexte logiciel dans la mémoire non volatile (116), en seconde.

3. Procédé selon la revendication 2, dans lequel la valeur seuil $Seuil_{Conso}$ est déterminée par l'équation :

$$Seuil_{Conso} = \frac{Conso_{Non\_Vola}}{Courant_{Sauv\_Vola}}$$

4. Procédé selon l'une des revendications précédentes, dans lequel la sauvegarde des données de contexte logiciel dans la mémoire non volatile (116) est conditionnée en outre au fait que la durée prévue de mise en veille prolongée soit inférieure ou égale à une durée minimale de mise en veille prolongée $d_{Min}$ garantissant une durée de vie souhaitée de la mémoire non volatile (116) et exprimée par l'équation :

$$d_{Min} = \frac{d_{Vie} \times 365 \times 24 \times 3600 \times Taille_{Contexte}}{N_{Max\_Cycles} \times Taille_{Mémoire\_Libre}}$$

avec $d_{Vie}$ : durée de vie souhaitée de la mémoire non volatile (116), en années ;
$Taille_{Contexte}$ : taille des données de contexte logiciel ;
$N_{Max\_Cycles}$ : nombre maximal théorique de cycles d'écriture / effacement de la mémoire non volatile (116) avant sa dégradation ;
$Taille_{Mémoire\_Libre}$ : taille de mémoire libre dans la mémoire non volatile (116).

5. Procédé selon l'une des revendications précédentes, dans lequel la sauvegarde des données de contexte logiciel dans la mémoire non volatile (116) est conditionnée en outre au fait que la valeur d'un paramètre $N_{Cycles\_vie}$ défini par l'équation :

$$N_{Cycles\_Vie} = N_{Cycles\_Compteur} \times \frac{Taille_{Contexte}}{Taille_{Mémoire\_Libre}}$$

soit inférieure au nombre maximal théorique de cycles d'écriture / effacement de la mémoire non volatile (116) avant sa dégradation,
avec $N_{Cycles\_Compteur}$ : nombre de cycles d'écriture / effacement déjà réalisés par la mémoire non volatile (116) ;
$Taille_{Contexte}$ : taille des données de contexte logiciel ;
$Taille_{Mémoire\_Libre}$ : taille de mémoire libre dans la mémoire non volatile (116).

6. Procédé selon l'une des revendications précédentes, dans lequel la sauvegarde des données de contexte logiciel dans la mémoire non volatile (116) comporte la mise en oeuvre des étapes suivantes :

- programmation (212) d'un drapeau $D_{Non\_Vola}$ indiquant que la sauvegarde des données de contexte logiciel est réalisée dans la mémoire non volatile (116) ;
- détermination (214) d'une adresse de début d'écriture dans la mémoire non volatile (116) ;
- écriture (216) des données de contexte logiciel dans la mémoire non volatile (116), à partir de l'adresse de début d'écriture précédemment déterminée ;
- soustraction (218), de la durée prévue de mise en veille prolongée du système embarqué (100), d'une durée de mise en oeuvre de la précédente étape d'écriture des données de contexte logiciel dans la mémoire non volatile (116) ;
- arrêt (220) de l'alimentation électrique de la mémoire volatile (114).

7. Procédé selon la revendication 6, comportant en outre une sortie de mise en veille prolongée du système embarqué (100) incluant au moins la mise en oeuvre des étapes suivantes :

- lecture (230) de la valeur du drapeau $D_{Non\_Vola}$ ;
- si la valeur du drapeau $D_{Non\_Vola}$ indique que la sauvegarde des données de contexte logiciel a été réalisée dans la mémoire volatile (114), le système embarqué (100) est mis directement à l'état actif, ou
- si la valeur du drapeau $D_{Non\_Vola}$ indique que la sauvegarde des données de contexte logiciel a été réalisée dans la mémoire non volatile (116), les données de contexte logiciel sont lues dans la mémoire non volatile (116) à partir de l'adresse de début d'écriture et écrites dans la mémoire volatile (114), puis des blocs de la mémoire non volatile (116) dans lesquels les données de contexte logiciel ont été sauvegardées sont effacés.

8. Procédé selon la revendication 7, dans lequel la sortie de mise en veille prolongée du système embarqué (100) comporte en outre, avant ou après l'étape de lecture de la valeur du drapeau, une étape de de reprise de l'alimentation électrique de la mémoire volatile (114).

9. Procédé selon la revendication 7 ou 8, dans lequel la sortie de mise en veille prolongée du système embarqué (100) comporte en outre, avant l'étape de lecture (230) de la valeur du drapeau $D_{\text{Non\_Vola}}$, une étape (226) de détermination d'une cause de la sortie de mise en veille prolongée du système embarqué (100), puis dans lequel :

- si la sortie de mise en veille est due à une réinitialisation du système embarqué (100), un démarrage initial du système embarqué (100), une mise à jour logiciel via FOTA, ou un événement de surveillance, le système embarqué (100) est mis directement à l'état actif sans lecture de la valeur du drapeau, ou
- si la sortie de mise en veille n'est pas due à une réinitialisation du système embarqué (100), un démarrage initial du système embarqué (100), une mise à jour logiciel via FOTA, ou un événement de surveillance, la lecture de la valeur du drapeau est mise en oeuvre.

10. Système embarqué (100) comprenant des moyens de mise en oeuvre du procédé selon l'une des revendications précédentes.

11. Système embarqué (100) selon la revendication 10, dans lequel la mémoire non volatile (116) est une mémoire Flash, et dans lequel la mémoire volatile (114) est une mémoire vive.

12. Produit programme informatique comprenant des instructions qui, lorsque le programme est exécuté par un système embarqué (100), conduisent celui-ci à mettre en oeuvre le procédé selon l'une des revendications 1 à 9.

13. Support lisible par ordinateur comprenant des instructions qui, lorsqu'elles sont exécutées par un système embarqué (100), conduisent celui-ci à mettre en oeuvre le procédé selon l'une des revendications 1 à 9.

Fig 1

Fig 2

Fig 3

Fig 4

Fig 5

Europäisches
Patentamt

European
Patent Office

Office européen
des brevets

# RAPPORT DE RECHERCHE EUROPEENNE

Numéro de la demande

EP 24 18 0967

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 2017/177870 A1 (HILDEBRAND UWE [DE]) 22 juin 2017 (2017-06-22) * alinéa [0148] - alinéa [0180] * * figures 18-20 * ----- | 1-13 | INV. G06F1/3234 G06F1/3246 G06F1/3203 G06F9/4401 |
| Y | US 2015/039922 A1 (CHALHOUB NICOLE [FR] ET AL) 5 février 2015 (2015-02-05) * alinéa [0003] - alinéa [0005] * * alinéa [0014] - alinéa [0064] * * figures 1-5 * ----- | 1-13 | |

DOMAINES TECHNIQUES
RECHERCHES (IPC)

G06F

Le présent rapport a été établi pour toutes les revendications

| Lieu de la recherche | Date d'achèvement de la recherche | Examinateur |
|---|---|---|
| La Haye | 16 octobre 2024 | Knutsson, Frédéric |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 24 18 0967

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-10-2024

| Document brevet cité au rapport de recherche | Date de publication | Membre(s) de la famille de brevet(s) | Date de publication |
|---|---|---|---|
| US 2017177870 A1 | 22-06-2017 | TW 201729034 A<br>US 2017177870 A1<br>WO 2017105711 A1 | 16-08-2017<br>22-06-2017<br>22-06-2017 |
| US 2015039922 A1 | 05-02-2015 | US 2015039922 A1<br>US 2016154456 A1 | 05-02-2015<br>02-06-2016 |

EPO FORM P0460

Pour tout renseignement concernant cette annexe : voir Journal Officiel de l'Office européen des brevets, No.12/82